(19) Europäisches Patentamt
European Patent Office
Office européen des brevets

(11) EP 4 084 145 A1

(12) EUROPEAN PATENT APPLICATION
published in accordance with Art. 153(4) EPC

(43) Date of publication:
02.11.2022 Bulletin 2022/44

(51) International Patent Classification (IPC):
H01M 4/525 (2010.01)    H01M 10/052 (2010.01)
H01M 10/0567 (2010.01)    H01M 10/0568 (2010.01)
H01M 10/0569 (2010.01)    H01M 50/531 (2021.01)

(21) Application number: 20905793.4

(22) Date of filing: 15.10.2020

(52) Cooperative Patent Classification (CPC):
H01M 4/525; H01M 10/052; H01M 10/0567;
H01M 10/0568; H01M 10/0569; H01M 50/531;
Y02E 60/10

(86) International application number:
PCT/JP2020/038955

(87) International publication number:
WO 2021/131258 (01.07.2021 Gazette 2021/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.12.2019 JP 2019235642

(71) Applicants:
• Panasonic Holdings Corporation
Osaka 571-8501 (JP)

• SANYO Electric Co., Ltd.
Daito-shi
Osaka 574-8534 (JP)

(72) Inventors:
• NISHINO Hajime
Osaka-shi, Osaka 540-6207 (JP)
• SHIOZAKI Tomoki
Osaka-shi, Osaka 540-6207 (JP)
• YOSHII Kazuhiro
Osaka-shi, Osaka 540-6207 (JP)

(74) Representative: Novagraaf International SA
Chemin de l'Echo 3
1213 Onex, Geneva (CH)

(54) **LITHIUM ION BATTERY**

(57) A lithium ion battery according to the present invention comprises a positive electrode, a negative electrode, a positive electrode lead that is connected to the positive electrode, an insulation tape that covers the positive electrode lead, and an electrolyte solution. The insulation tape comprises a base material layer that is mainly composed of an organic material, and a filler layer that is provided on the base material layer; the filler layer contains an oxide compound of an alkaline earth metal; and the electrolyte solution contains fluorine.

EP 4 084 145 A1

Figure 2A

**Description**

TECHNICAL FIELD

The present invention relates to a lithium ion battery.

BACKGROUND

Conventionally, there has been proposed a battery in which a positive electrode lead connected to a positive electrode is covered with an insulating tape to improve insulation properties between the positive electrode lead and a negative electrode (see, for example, PATENT LITERATURE 1 to 3).

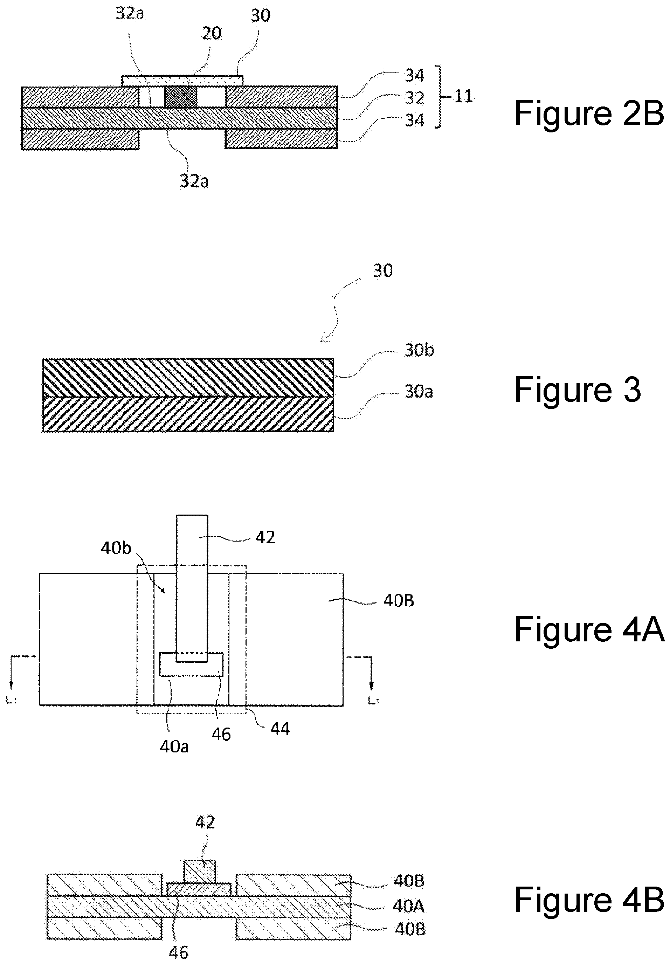

FIGS. 4A and 4B are configuration diagrams of a positive electrode of the lithium ion battery described in PATENT LITERATURE 1, FIG. 4A is a partial top view observed from the side of one principal surface of a current collector, and FIG. 4B is a cross-sectional view along line L1-L1 in FIG. 4A.

As shown in FIGS. 4A and 4B, an insulating tape 44 disposed on the side of one principal surface of a positive electrode current collector 40A covers a positive electrode current collector exposed surface 40a of a double-side uncoated part 40b on which a positive electrode mixture layer 40B is not formed, a positive electrode lead 42 on the positive electrode current collector exposed surface 40a, and a protective layer 46 interposed between a lower end part of the positive electrode lead 42 and the positive electrode current collector exposed surface 40a. As described above, by covering the positive electrode lead 42 with the insulating tape 44, an internal short circuit between the positive electrode lead and a negative electrode can be prevented by the insulating tape 44 when a separator between the positive electrode and the negative electrode melts or tears at the time of abnormality of the battery, for example.

CITATION LIST

PATENT LITERATURE

PATENT LITERATURE 1: JP 2014-89856 A
PATENT LITERATURE 2: WO 2017/038010 A
PATENT LITERATURE 3: JP 2017-152372 A

SUMMARY

When a foreign matter entering the inside of the battery penetrates through an insulating tape, and an internal short circuit occurs between a positive electrode lead and a negative electrode, the battery may generate heat. Therefore, conventionally, a filler such as alumina is added to the insulating tape to improve heat resistance of the insulating tape, thereby suppressing an increase in battery temperature at the time of internal short circuit.

However, in a lithium ion battery using an electrolyte including fluorine, there is a problem that a filler is eluted by hydrofluoric acid generated through a reaction between moisture that has entered the inside of the battery and fluorine, deteriorating high-temperature storage characteristics of the lithium ion battery.

An aspect of the present disclosure is a lithium ion battery including: a positive electrode; a negative electrode; a positive electrode lead connected to the positive electrode; an insulating tape covering the positive electrode lead; and an electrolyte, wherein the insulating tape has a substrate layer mainly containing organic material, and a filler layer provided on the substrate layer, the filler layer includes an oxide compound of an alkaline earth metal, and the electrolyte includes fluorine.

According to the present disclosure, in a lithium ion battery using an electrolyte including fluorine, it is possible to suppress an increase in battery temperature when a foreign matter penetrates an insulating tape to cause an internal short circuit, and to suppress a decrease in high-temperature storage characteristics.

BRIEF DESCRIPTION OF DRAWINGS

FIG. 1 is a cross-sectional view of a lithium ion battery according to an embodiment.
FIG. 2A is a partial top view observed from the side of one principal surface of a positive electrode.
FIG. 2B is a cross-sectional view along line L1-L1 in FIG. 2A.

FIG. 3 is a partial cross-sectional view of an insulating tape used in the present embodiment.

FIG. 4A is a configuration diagram of a positive electrode of the lithium ion battery described in PATENT LITERATURE 1.

FIG. 4B is a configuration diagram of a positive electrode of the lithium ion battery described in PATENT LITERATURE 1.

FIG. 5A is a partial top view of the positive electrode of Example 1 observed from the side of one principal surface.

FIG. 5B is a cross-sectional view along line L1-L1 in FIG. 5A.

DESCRIPTION OF EMBODIMENTS

Hereinafter, an example of a lithium ion battery according to an aspect of the present disclosure will be described. The drawings referred to in the following description of the embodiments are schematically illustrated, and dimensional ratios and the like of components drawn in the drawings may be different from those of actual components.

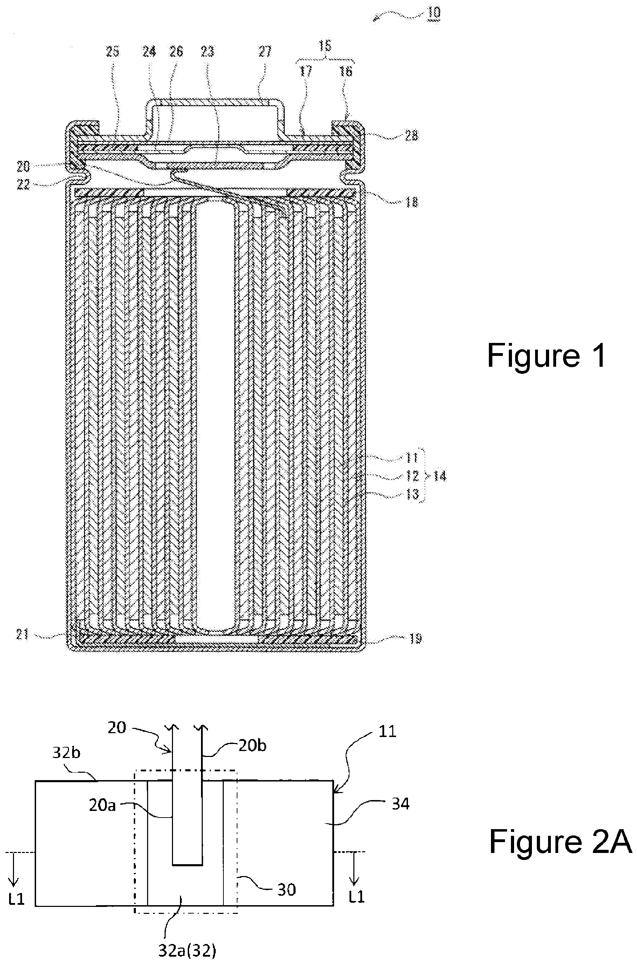

FIG. 1 is a cross-sectional view of a lithium ion battery according to an embodiment. A lithium ion battery 10 shown in FIG. 1 comprises a winding-type electrode assembly 14 in which a positive electrode 11 and a negative electrode 12 are wound with a separator 13 interposed therebetween; an electrolyte; insulating plates 18 and 19 respectively disposed above and below the electrode assembly 14; a positive electrode lead 20 and a negative electrode lead 21; an insulating tape covering the positive electrode lead 20; and a battery case 15.

The electrode assembly 14 is not limited to a winding-type electrode assembly, and for example, other forms such as a layered type electrode assembly in which a positive electrode and a negative electrode are alternately layered with a separator interposed therebetween may be applied.

The battery case 15 accommodates the electrode assembly 14, the electrolyte, and the like, and comprises, for example, a bottomed cylindrical case body 16 having an opening, and a sealing assembly 17 sealing the opening of the case body 16. The battery case 15 desirably comprises a gasket 28 provided between the case body 16 and the sealing assembly 17, thereby ensuring the sealability inside the battery. The battery case 15 is not limited to one having a cylindrical shape, and may be, for example, a square battery case, a layered-type battery case, or the like.

The case body 16 has, for example, a projecting portion 22 supporting the sealing assembly 17, and a part of a side face of the case body 16 projects inward to form the projecting portion 22. The projecting portion 22 is preferably formed in an annular shape along the circumferential direction of the case body 16, and supports the sealing assembly 17 on the upper face thereof.

The sealing assembly 17 has a structure in which a filter 23, a lower vent member 24, an insulator 25, an upper vent member 26, and a cap 27 are layered in this order from the electrode assembly 14 side. Each member constituting sealing assembly 17 has, for example, a disk shape or a ring shape, and each member except for the insulator 25 is electrically connected to each other. The lower vent member 24 and the upper vent member 26 are connected to each other at the central parts of respective members, and the insulator 25 is interposed between the peripheral parts of respective members. When the internal pressure increases due to heat generated by an internal short circuit or the like, the lower vent member 24 deforms so as to push up the upper vent member 26 toward the cap 27 and breaks, and the current path between the lower vent member 24 and the upper vent member 26 is cut off, for example. When the internal pressure further increases, the upper vent member 26 breaks, and the gas is discharged from an opening of the cap 27.

One end of the positive electrode lead 20 is connected to the positive electrode 11. In addition, the positive electrode lead 20 extends from the positive electrode 11 to the filter 23 through a through hole of the insulating plate 18, and the other end of the positive electrode lead 20 is connected to the lower face of the filter 23. As a result, the cap 27 electrically connected to the filter 23 serves as a positive electrode terminal. One end of the negative electrode lead 21 is connected to the negative electrode 12. The negative electrode lead 21 extends from the negative electrode 12 to the internal face of a bottom part of the case body 16 through the outside of the insulating plate 19, and the other end of the negative electrode lead 21 is connected to the internal face of the bottom part of the case body 16. As a result, the case body 16 serves as a negative electrode terminal.

Hereinafter, the electrolyte will be described. The electrolyte includes a solvent and an electrolyte salt dissolved in the solvent. The electrolyte is an electrolyte including fluorine. Fluorine may be included in either the solvent or the electrolyte salt, or may be included in a component other than the solvent or the electrolyte salt constituting the electrolyte. Examples of the solvent including fluorine include fluorine-substituted products in which at least a part of hydrogen of esters, ethers, nitriles, amides such as dimethylformamide, and isocyanates such as hexamethylene diisocyanate is substituted with fluorine.

The fluorine-substituted product is preferably a fluorinated cyclic carbonic acid ester, a fluorinated chain carbonic acid ester, or a fluorinated chain carboxylic acid ester from the point of battery characteristics, and particularly preferably a fluorinated cyclic carbonic acid ester or a fluorinated chain carboxylic acid ester.

Preferred examples of the fluorinated cyclic carbonic acid ester include 4-fluoroethylene carbonate (FEC), 4,5-difluoroethylene carbonate, 4,4-difluoroethylene carbonate, 4,4,5-trifluoroethylene carbonate, and 4,4,5,5-tetrafluoroethylene carbonate. Preferred examples of the fluorinated chain carboxylic acid ester include fluorinated ethyl propionate, fluorinated methyl acetate, fluorinated ethyl acetate, fluorinated propyl acetate, ethyl 2,2,2-trifluoroacetate, methyl 3,3,3-trifluoropropionate, and methyl pentafluoropropionate. These may be independently used, or two or more thereof may be used in combination.

The solvent may include a non-fluorine-based solvent including no fluorine. Examples of the non-fluorine-based solvent include cyclic carbonic acid esters such as ethylene carbonate (EC), propylene carbonate (PC), and butylene carbonate; chain carbonic acid esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as $\gamma$-butyrolactone and $\gamma$-valerolactone; and chain carboxylic acid esters such as methyl acetate, ethyl acetate, propyl acetate, methyl propionate (MP), and ethyl propionate.

Examples of the electrolyte salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylate, LiCl, LiBr, LiILi $(P(C_2O_4)F_4)$, $LiPF_{6-x}(C_nF_{2n+1})x$ (1 < x < 6, n is 1 or 2), chloroborane lithium, borates, and imide salts. Examples of the borates include Li $[B(C_2O_4)_2]$, $Li[B(C_2O_4)F_2]$, $Li_2B_4O_7$, lithium bis(1,2-benzenediolate(2-)-O,O')borate, lithium bis(2,3-naphthalenediolate(2-)-O,O')borate, lithium bis(2,2'-biphenyldiolate(2-)-O,O')borate, and lithium bis(5-fluoro-2-olate-1-benzenesulfonic acid-O,O')borate. Examples of the imide salts include lithium bisfluorosulfonylimide ($LiN(F_SO_2)_2$, hereinafter, also referred to as LiFSI), lithium imide bistrifluoromethanesulfonate ($LiN(CF_3SO_2)_2$), lithium imide trifluoromethanesulfonate ($LiN(CF_3SO_2)(C_4F_9SO_2)$), lithium imide bispentafluoroethanesulfonate ($LiN(C_2F_5SO_2)_2$), and $LiN(C_lF_{2l+1}SO_2)(C_mF_{2m+1}SO_2)$ {1 and m are an integer of 0 or more}. Among them, $LiPF_6$, LiFSI (lithium bis(fluorosulfonyl)imide), $LiBF_4$, $LiSbF_6$, $LiCF_3SO_3$, $LiCF_3CO_2$, and $LiAsF_6$ are preferable from the point of battery characteristics. These electrolyte salts may be independently used, or two or more thereof may be used in combination. The concentration of the electrolyte salt is, for example, preferably 0.5 to 3 mol/L, and more preferably 0.8 to 1.8 mol/L.

The electrolyte may include an additive. Examples of the additive include an unsaturated cyclic carbonic acid ester, an acid anhydride, a phenol compound, a benzene compound, a nitrile compound, an isocyanate compound, a sultone compound, and a sulfuric acid compound.

Examples of the unsaturated cyclic carbonic acid ester include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinylethylene carbonate, and divinylethylene carbonate. The unsaturated cyclic carbonic acid ester may be independently used, or two or more thereof may be used in combination. In the unsaturated cyclic carbonic acid ester, some of hydrogen atoms may be substituted with fluorine atoms.

The acid anhydride may be, for example, an anhydride in which a plurality of carboxylic acid molecules are condensed between molecules, but is preferably an acid anhydride of polycarboxylic acid. Examples of the acid anhydride of polycarboxylic acid include succinic anhydride, maleic anhydride, and phthalic anhydride.

Examples of the phenol compound include phenol and hydroxytoluene.

Examples of the benzene compound include fluorobenzene, hexafluorobenzene, and cyclohexylbenzene (CHB).

Examples of the nitrile compound include adiponitrile, pimelonitrile, propionitrile, and succinonitrile.

Examples of the isocyanate compound include methyl isocyanate (MIC), diphenylmethane diisocyanate (MDI), hexamethylene diisocyanate (HDI), toluene diisocyanate (TDI), isophorone diisocyanate (IPDI), and bisisocyanatemethylcyclohexane (BIMCH).

Examples of the sultone compound include propane sultone and propene sultone.

Examples of the sulfuric acid compound include ethylene sulfate, ethylene sulfite, dimethyl sulfate, and lithium fluorosulfate.

Among the above additives, vinylene carbonate is preferable from the point of battery characteristics.

The electrolyte preferably includes a difluorophosphoric acid salt from the point of battery characteristics, and particularly preferably includes lithium difluorophosphate ($LiPF_2O_2$).

Hereinafter, the insulating tape of the present embodiment covering the positive electrode 11 and the positive electrode lead 20 will be described.

FIG. 2A is a partial top view observed from the side of one principal surface of the positive electrode, and FIG. 2B is a cross-sectional view along line L1-L1 in FIG. 2A. In FIG. 2A, in order to clarify the configuration of the positive electrode 11, an insulating tape (sign 30) covering the positive electrode lead 20 is shown by a dashed-dotted line as a transparent illustration.

The positive electrode 11 comprises a positive electrode current collector 32 and a positive electrode active material layer 34 formed on the positive electrode current collector 32. Foil of a metal such as aluminum which is stable within the potential range of the positive electrode, a film in which the metal is disposed on a surface layer thereof, or the like is used for the positive electrode current collector 32. The positive electrode active material layer 34 includes a positive electrode active material. The positive electrode active material layer 34 preferably includes a conductive agent and a binder in addition to the positive electrode active material.

Examples of the positive electrode active material include Li composite oxides including lithium (Li) and a transition metal element such as cobalt (Co), manganese (Mn), and nickel (Ni). The Li composite oxide may include other additive elements other than Co, Mn, and Ni, and may include, for example, aluminum (Al), zirconium (Zr), boron (B), magnesium (Mg), scandium (Sc), yttrium (Y), titanium (Ti), iron (Fe), copper (Cu), zinc (Zn), chromium (Cr), lead (Pb), tin (Sn), sodium (Na), potassium (K), barium (Ba), strontium (Sr), calcium (Ca), tungsten (W), molybdenum (Mo), niobium (Nb), and silicon (Si).

The positive electrode active material preferably includes a Li composite oxide having a Co content of 20% or less from the point of suppressing deterioration of high-temperature storage characteristics. From the point of suppressing deterioration of high-temperature storage characteristics, a lower Co content is preferable, and the Co content is more preferably 10% or less. Here, the Co content means a molar ratio of Co to the total amount of metals excluding Li in the Li composite oxide. For example, the Co content of 20% or less means that the Co content in the Li composite oxide is 0.2 or less in terms of a molar ratio with respect to the total amount of metals excluding Li. The lower limit of the Co content is preferably 5% or more from the point of, for example, suppressing deterioration of charge-discharge cycle characteristics of the lithium ion battery. That is, from the point of, for example, suppressing deterioration of high-temperature storage characteristics and charge-discharge cycle characteristics, the positive electrode active material preferably includes a Li composite oxide having a Co content of 5% or more and 20% or less, more preferably includes a Li composite oxide having a Co content of 5% or more and 10% or less. The positive electrode active material is not limited to one including a Li composite oxide having a Co content of more than 20%, and may be included as long as the effects of the present disclosure are not impaired. For example, the content of the Li composite oxide having a Co content of more than 20% is preferably 10 mass% or less based on the total amount of the positive electrode active material, and the content of the Li composite oxide having a Co content of 20% or less is preferably 90 mass% or more based on the total amount of the positive electrode active material.

Examples of the conductive agent included in the positive electrode active material layer 34 include carbon powders and the like of carbon black, acetylene black, Ketjen black, graphite, and the like. These may be independently used, or two or more thereof may be used in combination.

Examples of the binder included in the positive electrode active material layer 34 include fluoropolymers and rubber polymers. Examples of the fluoropolymer include polytetrafluoroethylene (PTFE), polyvinylidene fluoride (PVdF), and modified products thereof. Examples of the rubber polymer include ethylene-propylene-isoprene copolymers and ethylene-propylene-butadiene copolymers. These may be independently used, or two or more thereof may be used in combination.

The positive electrode current collector 32 has an exposed part 32a where the positive electrode active material layer 34 is not formed. The exposed part 32a shown in FIGS. 2A and 2B is formed on both sides of the one principal surface and the other principal surface of the positive electrode current collector 32. The exposed part 32a may be formed at any position of the positive electrode current collector 32, but is usually formed at the central side in the longitudinal direction of the positive electrode current collector 32.

The positive electrode lead 20 comprises one end part 20a connected to the exposed part 32a of the positive electrode current collector 32 and an extending part 20b extending to the outside of a peripheral part 32b of the positive electrode current collector 32. The positive electrode lead 20 has the other end part on the tip side from the extending part 20b, and the other end part is connected to the filter 23 of the sealing assembly 17 as described above. A method for connecting the one end part 20a of the positive electrode lead 20 and the exposed part 32a of the positive electrode current collector 32 is not particularly limited as long as electrical connection between the positive electrode lead 20 and the positive electrode current collector 32 is secured, and examples thereof include ultrasonic welding.

Material for the positive electrode lead 20 is not particularly limited, and may be a metal such as aluminum or titanium.

The insulating tape 30 shown in FIGS. 2A and 2B covers the one end part 20a of the positive electrode lead 20. That is, the insulating tape 30 covers the positive electrode lead 20 positioned on the exposed part 32a of the positive electrode current collector 32. However, the position of the positive electrode lead 20 covered with the insulating tape 30 is not limited to the one end part 20a of the positive electrode lead 20, and may be, for example, the extending part 20b of the positive electrode lead 20 or the other end part of the positive electrode lead 20 which is a part connected to the sealing assembly 17. The internal short circuit occurring between the positive electrode lead 20 and the negative electrode 12 is likely to occur mainly between the one end part 20a of the positive electrode lead 20 and the negative electrode 12 or between the extending part 20b of the positive electrode lead 20 and the negative electrode 12. Therefore, the insulating tape 30 preferably covers at least one of the one end part 20a and the extending part 20b of the positive electrode lead 20, and particularly preferably covers the one end part 20a of the positive electrode lead 20. When the one end part 20a of the positive electrode lead 20 is covered with the insulating tape 30, a part of the one end part 20a of the positive electrode lead 20 may be covered with the insulating tape 30, but it is preferable to cover the entire one end part 20a from the point of, for example, effectively suppressing the occurrence of the internal short circuit. Incidentally, when the extending part 20b of the positive electrode lead 20 is covered with the insulating tape 30, the insulating tape 30 may cover a part of the extending part 20b, but preferably covers the entirety of the extending part 20b. When a part or the entirety of the extending part 20b of the positive electrode lead 20 is covered with the insulating tape 30, the insulating tape 30 is preferably wound around the extending part 20b to cover the entirety of the outer periphery of the extending part 20b.

As shown in FIGS. 2A and 2B, the insulating tape 30 may cover the exposed part 32a of the positive electrode current collector 32 as well as the one end part 20a of the positive electrode lead 20. When the exposed part 32a is covered with the insulating tape 30, the insulating tape 30 may cover a part of the exposed part 32a, but preferably covers the entirety of the exposed part 32a from the point of effectively suppressing occurrence of an internal short circuit. In FIGS. 2A and 2B, a space (distance) is shown between the insulating tape 30 and the exposed part 32a, but the insulating tape 30 preferably adheres to the exposed part 32a. As shown in FIGS. 2A and 2B, the insulating tape 30 may be disposed on the positive electrode active material layer 34 protruding from the exposed part 32a.

Hereinafter, the configuration of the insulating tape 30 will be described.

FIG. 3 is a partial cross-sectional view of an insulating tape used in the present embodiment. As shown in FIG. 3, the insulating tape 30 has a filler layer 30a and a substrate layer 30b. The filler layer 30a of the insulating tape 30 is disposed on the side of the positive electrode lead 20. That is, the insulating tape 30 shown in FIG. 3 has a layered structure in which the filler layer 30a and the substrate layer 30b are layered in this order from the positive electrode lead 20 side.

The substrate layer 30b is not particularly limited as long as it is a layer mainly containing organic material. Here, the phrase "mainly containing organic material" means that the proportion of the organic material is the highest among materials constituting substrate layer 30b. The content of the organic material is, for example, preferably 80 mass% or more, and more preferably 90 mass% or more, based on the total mass of the substrate layer 30b, from the point of the strength and the like of the insulating tape 30. The organic material is preferably polymer material from the point of, for example, flexibility and strength of the insulating tape 30. Examples thereof include cellulose derivatives (for example, cellulose ether and cellulose ester), polyvinyl chloride, polyolefin (for example, polyethylene and polypropylene), polystyrene, polyester (for example, polyethylene terephthalate), polyimide, polyamide, polyamideimide, polycarbonate, and polyphenylene sulfide. Among them, polyimide and wholly aromatic polyamide (aramid) are preferable, and polyimide is particularly preferable. These may be independently used, or two or more thereof may be used in combination. The substrate layer 30b may have a layered structure having a first resin layer and a second resin layer, and examples thereof include a layered structure having a first resin layer including polyimide and a second resin layer including a resin other than polyimide. When the substrate layer 30b includes polyimide, the content of polyimide is preferably 80 mass% or more, and more preferably 90 mass% or more.

Polyimide is a collective term for polymers including an imide bond in a repeating unit, and usually means an aromatic polyimide in which an aromatic compound directly binds through an imide bond. The aromatic polyimide has a conjugate structure in which an imide bond intervenes between aromatic rings, and therefore is rigid and has a strong molecular structure. The type of the polyimide is not particularly limited, and may be a wholly aromatic polyimide such as polypyrromellitimide, a semi-aromatic polyimide such as polyetherimide, or a thermosetting polyimide obtained by reacting bismaleimide with aromatic diamine.

The thickness of the substrate layer 30b is arbitrary, but is, for example, preferably 5 $\mu$m or more and 30 $\mu$m or less, and more preferably 10 $\mu$m or more and 30 $\mu$m or less, from the point of, for example, the strength of the insulating tape 30.

Incidentally, the substrate layer 30b is not limited to one including a filler such as inorganic material, but it is preferable that the substrate layer 30b does not include a filler as much as possible from the point of, for example, flexibility of the insulating tape 30.

The filler layer 30a includes an oxide compound of an alkaline earth metal. By providing the filler layer 30a including an oxide compound of an alkaline earth metal, heat resistance of the insulating tape 30 can be improved. For example, even if a foreign matter penetrates the insulating tape 30 to cause an internal short circuit between the positive electrode lead 20 and the negative electrode 12, and as a result, the battery generates heat, melting or decomposition of the insulating tape 30 can be suppressed. As a result, expansion of the short-circuit part or continuation of the short circuit is suppressed, and an increase in battery temperature is suppressed. In addition, the oxide compound of an alkaline earth metal is less soluble in hydrofluoric acid than fillers such as alumina and silica included in conventional filler layers. Therefore, even when hydrofluoric acid is generated in a lithium ion battery using an electrolyte including fluorine, elution of an oxide compound of an alkaline earth metal in the filler layer 30a is suppressed by the hydrofluoric acid. As a result, diffusion of impurities derived from the filler layer into the lithium ion battery is suppressed, so that deterioration of the high-temperature storage characteristics of the lithium ion battery is suppressed as compared with the case of using a filler layer including a conventional filler (alumina, silica, or the like). The high-temperature storage characteristics mean the degree of capacity decrease after the lithium ion battery in a charged state is stored for a predetermined period under a high-temperature environment.

Examples of the oxide compound of an alkaline earth metal include an oxide of an alkaline earth metal, a sulfate of an alkaline earth metal, a nitrate of an alkaline earth metal, and a carbonate of an alkaline earth metal. Among them, a sulfate of an alkaline earth metal and a nitrate of an alkaline earth metal are preferable, and a sulfate of an alkaline earth metal is particularly preferable from the point of, for example, effectively suppressing deterioration of high-temperature storage characteristics. Specifically, beryllium nitrate, magnesium nitrate, calcium nitrate, strontium nitrate, barium nitrate, beryllium sulfate, magnesium sulfate, calcium sulfate, strontium sulfate, barium sulfate and the like are preferable. These may be independently used, or two or more thereof may be used in combination.

The filler layer 30a preferably includes an adhesive from the point of, for example, securing adhesiveness between the insulating tape 30 and the positive electrode lead 20. Examples of the adhesive include acrylic resin, natural rubber, synthetic rubber, silicone, epoxy resin, melamine resin, and phenol resin. These may be independently used, or two or more thereof may be used in combination. The adhesive may include an additive material such as a tackifier, a crosslinking agent, an antiaging agent, a colorant, an antioxidant, a chain transfer agent, a plasticizer, a softener, a surfactant, and an antistatic agent, and a solvent in addition to the resin material as necessary.

The content of the oxide compound of an alkaline earth metal in the filler layer 30a is, for example, preferably in a range of 3 mass% to 80 mass%, and more preferably in a range of 20 mass% to 70 mass%. In addition, the content of the adhesive in the filler layer 30a is, for example, preferably in a range of 20 mass% to 97 mass%, and more preferably in a range of 30 mass% to 80 mass%. In addition, the filler layer 30a may include a conventional filler such as alumina or silica, but when the content of the conventional filler increases, the effect of suppressing deterioration of the high-temperature storage characteristics of the lithium ion battery may not be sufficiently obtained. Therefore, the content of the conventional filler in the filler layer 30a is preferably 5 mass% or less, and preferably 1 mass% or less.

The thickness of the filler layer 30a is arbitrary, but is, for example, preferably in a range of 1 $\mu$m to 25 $\mu$m, and more preferably in a range of 5 $\mu$m to 20 $\mu$m, from the point of, for example, effectively suppressing melting or decomposition of the insulating tape 30.

The thickness of the insulating tape 30 is not particularly limited, but is preferably in a range of 10 to 55 $\mu$m, for example. When the thickness of the insulating tape 30 is less than 10 $\mu$m, the insulating tape 30 is easily broken by a foreign matter entering the inside of the battery. When the thickness of the insulating tape 30 exceeds 55 $\mu$m, the volume of another component is required to be reduced so as to accommodate the electrode assembly 14 in the case body 16 having a predetermined size.

A modification of the insulating tape 30 of the present embodiment will be described. In the insulating tape 30 of the present embodiment, the filler layer 30a including an oxide compound of an alkaline earth metal may be provided on both sides of the substrate layer 30b mainly containing organic material. The insulating tape 30 of the present embodiment may be disposed on the positive electrode lead 20 such that the filler layer 30a including an oxide compound of an alkaline earth metal is disposed on a side opposite to the positive electrode lead 20 with the substrate layer 30b mainly containing organic material interposed between the filler layer 30a and the positive electrode lead 20. That is, the insulating tape 30 may have a layered structure in which the substrate layer 30b mainly containing organic material and the filler layer 30a including an oxide compound of an alkaline earth metal are layered in this order from the positive electrode lead 20 side. In addition, the insulating tape 30 of the present embodiment may further have an adhesive layer including an adhesive. That is, the insulating tape 30 may have a layered structure in which the adhesive layer including an adhesive, the filler layer 30a including an oxide compound of an alkaline earth metal, and the substrate layer 30b mainly containing organic material are layered in this order from the positive electrode lead 20 side, a layered structure in which the adhesive layer including an adhesive, the substrate layer 30b mainly containing organic material, and the filler layer 30a including an oxide compound of an alkaline earth metal are layered in this order from the positive electrode lead 20 side, or the like.

The insulating tape 30 of the present embodiment may cover not only the positive electrode lead 20 but also a portion where an internal short circuit of the battery may occur. For example, in the negative electrode 12, an exposed part of the negative electrode current collector is usually formed, and one end of the negative electrode lead 21 is connected onto the exposed part, similarly to the positive electrode 11. The negative electrode lead 21 and the exposed part of the negative electrode current collector may be covered with the insulating tape 30 of the present embodiment when the negative electrode lead 21 and the exposed part of the negative electrode current collector are a portion where an internal short circuit of the battery occurs.

Hereinafter, the negative electrode 12 and the separator 13 will be described.

The negative electrode 12 comprises a negative electrode current collector and a negative electrode active material layer formed on the negative electrode current collector. Foil of a metal which is stable within the potential range of the negative electrode, such as copper, a film in which the metal is disposed on a surface layer thereof, or the like can be used for the negative electrode current collector. The negative electrode active material layer includes a negative electrode active material. The negative electrode active material layer preferably includes a thickener and a binder in addition to the negative electrode active material.

Carbon material capable of storing and releasing lithium ions can be used as the negative electrode active material, and hardly graphitizable carbon, easily graphitizable carbon, fibrous carbon, coke, carbon black, and the like can be used in addition to graphite. Furthermore, silicon, tin, and alloys or oxides mainly containing these can be used as the non-carbon-based material.

As the binder, PTFE or the like can be used as in the case of the positive electrode, but a styrene-butadiene copolymer (SBR) or a modified product thereof, or the like may be used. As the thickener, carboxymethyl cellulose (CMC) or the like can be used.

Although not shown in the drawings, the negative electrode current collector has an exposed part where the negative electrode active material layer is not formed, similarly to the positive electrode current collector 32 described above. The exposed part of the negative electrode current collector may be formed at any position of the negative electrode current collector, but is usually formed on an end part in the longitudinal direction of the negative electrode current collector. Similarly to the positive electrode lead 20 described above, the negative electrode lead 21 comprises one end part connected to the exposed part of the negative electrode current collector and an extending part extending from the one end part to the outside of the peripheral part of the negative electrode current collector. The negative electrode lead 21 has the other end part on the tip side from the extending part, and the other end part is connected to the internal face of the bottom part of the case body 16. Material for the negative electrode lead 21 is not particularly limited, and may be a metal such as nickel or titanium.

At least one of the one end part, the extending part, and the other end part of the negative electrode lead 21 may be covered with the insulating tape 30. The exposed part of the negative electrode current collector may also be covered with the insulating tape 30.

A porous sheet having ion permeability and insulation properties is used as the separator 13, for example. Specific examples of the porous sheet include a fine porous thin film, a woven fabric, and a nonwoven fabric. As material of the separator 13, olefin-based resin such as polyethylene or polypropylene, cellulose, or the like is suitable. The separator 13 may be a layered body having a cellulose fiber layer and a fiber layer of thermoplastic resin such as olefin-based resin. In addition, the separator 13 may be a multilayer separator having a polyethylene layer and a polypropylene layer, and a separator having a surface coated with a material such as aramid-based resin or ceramic may be used.

EXAMPLES

Hereinafter, the present disclosure will be further described with reference to examples, but the present disclosure is not limited to these examples.

<Example 1>

[Production of Positive Electrode]

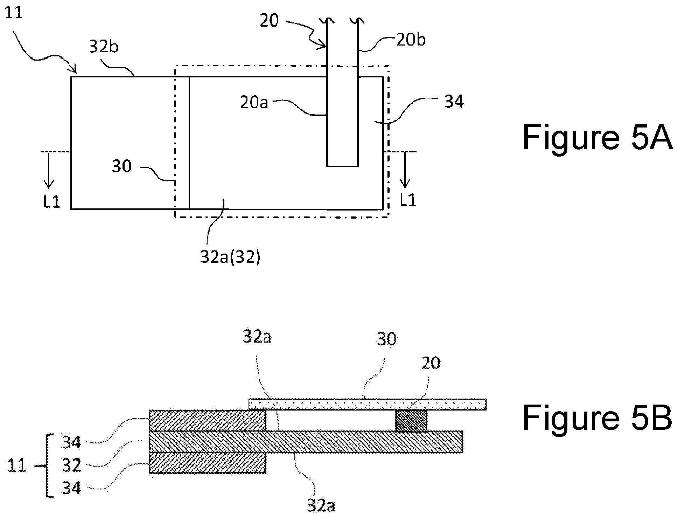

A positive electrode mixture slurry was prepared by mixing 100 parts by mass of $LiNi_{0.77}Co_{0.20}Al_{0.03}O_2$ as a positive electrode active material, 1.0 parts by mass of acetylene black as a conductive agent, 0.9 parts by mass of polyvinylidene fluoride as a binder, and an appropriate amount of NMP The obtained positive electrode mixture slurry was applied to both sides of aluminum foil having a thickness of 15 $\mu$m to be a positive electrode current collector, followed by drying and rolling to produce a strip-shaped positive electrode. FIG. 5A is a partial top view of the positive electrode of Example 1 observed from the side of one principal surface, and FIG. 5B is a cross-sectional view along line L1-L1 in FIG. 5A. As shown in FIGS. 5A and 5B, the exposed part 32a of aluminum foil in which one end part to the other end part in the width direction of the positive electrode current collector 32 are exposed was provided on both sides of the outermost peripheral end in the longitudinal direction of the positive electrode 11. At this time, the width of the exposed part 32a was set to 60 mm. One end part of the positive electrode lead 20 was disposed at a position 3 mm away from the outermost peripheral end on the exposed part 32a of the positive electrode current collector 32, and the one end part was welded to the exposed part 32a.

An insulating tape was attached so as to cover the entirety of the surface of the one end part of the positive electrode lead and the exposed part of the positive electrode current collector. The insulating tape used is an insulating tape having a substrate layer made of polyimide and having a thickness of 25 $\mu$m and a filler layer having a thickness of 7 $\mu$m. The polyimide is synthesized by a reaction of pyromellitic anhydride and diaminodiphenyl ether. As the filler layer, a mixture of 50 parts by mass of an acrylic adhesive containing acrylic resin as a main component and 50 parts by mass of $Ba(NO_3)_2$ particles as a filler was used.

[Production of Negative Electrode]

A negative electrode mixture slurry was prepared by mixing 100 parts by mass of scaly artificial graphite having an average particle diameter of about 20 $\mu$m as a negative electrode active material, 1 part by mass of styrene butadiene rubber as a binder, 1 part by mass of carboxymethyl cellulose as a thickener, and water. The obtained negative electrode mixture slurry was uniformly applied to both sides of copper foil having a thickness of 8 $\mu$m to be a negative electrode current collector, followed by drying and rolling to produce a strip-shaped negative electrode. Provided that exposed parts were provided on both sides of the end part of the negative electrode at the winding end side. One end part of the negative electrode lead was disposed on the exposed part of the negative electrode current collector, and the one end part was welded to the exposed part.

[Preparation of Electrolyte]

LiPF$_6$ was dissolved in a mixed solvent of DMC, EMC, and 4-fluoroethylene carbonate (volume ratio 40 : 40 : 20) so as to have a concentration of 1.0 mol/L to prepare an electrolyte.

[Production of Battery]

The positive electrode and the negative electrode were layered with the separator interposed therebetween and wound to form an electrode assembly. Insulating plates were disposed above and below the electrode assembly, and the electrode assembly was accommodated in an iron case body whose internal surface was plated with nickel. The negative electrode lead projecting from the electrode assembly and the bottom face of the battery case were welded, and the positive electrode lead projecting from the electrode assembly and the internal face of the sealing assembly provided with a gasket at the peripheral part thereof were welded. After the non-aqueous electrolyte was injected into the case body, the opening of the case body was closed with a sealing assembly, and the end part of the opening of the case body was crimped with the peripheral part of the sealing assembly via the gasket to produce a cylindrical lithium ion battery.

<Example 2>

A lithium ion battery was produced in the same manner as in Example 1 except that LiNi$_{0.77}$Co$_{0.20}$Al$_{0.03}$O$_2$ was used as the positive electrode active material, and a mixture of 50 parts by mass of an acrylic adhesive containing acrylic resin as a main component and 50 parts by mass of BaSO$_4$ particles as the filler was used as the filler layer of the insulating tape.

<Example 3>

A lithium ion battery was produced in the same manner as in Example 1 except that LiNi$_{0.67}$Co$_{0.30}$Al$_{0.03}$O$_2$ was used as the positive electrode active material, and a mixture of 20 parts by mass of an acrylic adhesive material containing acrylic resin as a main component and 80 parts by mass of BaSO$_4$ particles as the filler was used as the filler layer of the insulating tape.

<Example 4>

A lithium ion battery was produced in the same manner as in Example 1 except that LiNi$_{0.67}$Co$_{0.30}$Al$_{0.03}$O$_2$ was used as the positive electrode active material, and a mixture of 97 parts by mass of an acrylic adhesive containing acrylic resin as a main component and 3 parts by mass of BaSO$_4$ particles as the filler was used as the filler layer of the insulating tape.

<Example 5>

A lithium ion battery was produced in the same manner as in Example 1 except that LiNi$_{0.92}$Co$_{0.05}$Al$_{0.03}$O$_2$ was used as the positive electrode active material, a mixture of 50 parts by mass of an acrylic adhesive containing acrylic resin as a main component and 50 parts by mass of SrSO$_4$ particles as the filler was used as the filler layer of the insulating tape, and 2 mass% of vinylene carbonate was added to the electrolyte.

<Example 6>

A lithium ion battery was produced in the same manner as in Example 1 except that LiNi$_{0.92}$Co$_{0.05}$Al$_{0.03}$O$_2$ was used as the positive electrode active material, a mixture of 50 parts by mass of an acrylic adhesive containing acrylic resin as a main component and 50 parts by mass of BaSO$_4$ particles as the filler was used as the filler layer of the insulating tape, and 2 mass% of vinylene carbonate was added to the electrolyte.

<Example 7>

A lithium ion battery was produced in the same manner as in Example 1 except that $LiNi_{0.77}Co_{0.20}Al_{0.03}O_2$ was used as the positive electrode active material, a mixture of 50 parts by mass of an acrylic adhesive containing acrylic resin as a main component and 50 parts by mass of $BaSO_4$ particles as the filler was used as the filler layer of the insulating tape, and 2 mass% of vinylene carbonate was added to the electrolyte.

<Example 8>

A lithium ion battery was produced in the same manner as in Example 1 except that $LiNi_{0.87}Co_{0.10}Al_{0.03}O_2$ was used as the positive electrode active material, a mixture of 50 parts by mass of an acrylic adhesive containing acrylic resin as a main component and 50 parts by mass of $BaSO_4$ particles as the filler was used as the filler layer of the insulating tape, and 2 mass% of vinylene carbonate was added to the electrolyte.

<Example 9>

A lithium ion battery was produced in the same manner as in Example 1 except that $LiNi_{0.92}Co_{0.05}Al_{0.03}O_2$ was used as the positive electrode active material, a mixture of 50 parts by mass of an acrylic adhesive containing acrylic resin as a main component and 50 parts by mass of $BaSO_4$ particles as the filler was used as the filler layer of the insulating tape, and 0.1 mass% of vinylene carbonate was added to the electrolyte.

<Example 10>

A lithium ion battery was produced in the same manner as in Example 1 except that $LiNi_{0.92}Co_{0.05}Al_{0.03}O_2$ was used as the positive electrode active material, a mixture of 50 parts by mass of an acrylic adhesive containing acrylic resin as a main component and 50 parts by mass of $BaSO_4$ particles as the filler was used as the filler layer of the insulating tape, and 10 mass% of vinylene carbonate was added to the electrolyte.

<Comparative Example 1>

A lithium ion battery was produced in the same manner as in Example 1 except that $LiNi_{0.67}Co_{0.30}Al_{0.03}O_2$ was used as the positive electrode active material and an insulating tape including no filler was used.

<Comparative Example 2>

A lithium ion battery was produced in the same manner as in Example 1 except that $LiNi_{0.67}Co_{0.30}Al_{0.03}O_2$ was used as the positive electrode active material, and a mixture of 50 parts by mass of an acrylic adhesive containing acrylic resin as a main component and 50 parts by mass of $SiO_2$ particles as the filler was used as the filler layer of the insulating tape.

<Comparative Example 3>

A lithium ion battery was produced in the same manner as in Example 1 except that $LiNi_{0.67}Co_{0.30}Al_{0.03}O_2$ was used as the positive electrode active material, and a mixture of 50 parts by mass of an acrylic adhesive material containing acrylic resin as a main component and 50 parts by mass of $Al_2O_3$ particles as the filler was used as the filler layer of the insulating tape.

[Forced Internal Short Circuit Test]

A forced internal short circuit test of the batteries of Examples and Comparative Examples was performed in accordance with JIS C 8714. Note that a severe test was performed using a nickel small piece (height: 0.5 mm, width: 0.2 mm, L-shape with a side of 3 mm (angle: 90°)) having a size larger than that of a nickel small piece with a standard size. The nickel small piece was disposed between the insulating tape and the separator such that the small piece penetrated the insulating tape. Specifically, the nickel small piece was disposed on the insulating tape at the central part in the width direction of the positive electrode current collector and at a position 5 mm from the end part of the positive electrode active material layer. Then, a forced internal short circuit test was performed, and an increase in temperature on the side face of the battery was measured with a thermocouple. The measured battery temperature was evaluated according to the following criteria, and the results thereof are shown in Table 1.

○: Battery temperature is lower than 40°C
△: Battery temperature is 40°C or higher and lower than 100°C
×: Battery temperature is 100°C or higher

[High Temperature Storage Test]

The lithium ion battery of each of Examples and Comparative Examples was charged to 4.2 V at a constant current of 1C under the condition of 25°C, and then charged at a constant voltage of 4.2 V until the current value reached 0.05C to complete the charge (this charge is referred to as charge A). After 10 minutes of quiescence, the battery was discharged at a constant current of 1C until the voltage reached 2.5 V (this discharge is referred to as discharge A), and the discharge capacity at that time was defined as a capacity before storage. After 10 minutes of quiescence, only the charge A was performed, and the battery was stored at 60°C for 20 days. After the storage, the temperature was lowered to room temperature, and only the discharge A was performed. After 10 minutes of quiescence, the charge A was performed, after 10 minutes of quiescence, the discharge A was performed, and the discharge capacity at that time was defined as a recovered capacity. Then, the capacity recovery rate after high-temperature storage was determined from the following equation. The results thereof are shown in Table 1. Note that a higher value of the capacity recovery rate after high-temperature storage indicates that deterioration of high-temperature storage characteristics is suppressed.

$$\text{Capacity recovery rate after high-temperature storage (\%)} = (\text{recovered capacity/capacity before storage}) \times 100$$

[Table 1]

| | Electrolyte | | Co content in positive electrode active material (%) | Filler layer (content) | Forced internal short circuit test | Capacity recovery rate after high-temperature storage (%) |
|---|---|---|---|---|---|---|
| | Fluorine-based compound | Additive (content) | | | | |
| Example 1 | LiPF$_6$/FEC | None | 20 | Ba(NO$_3$)$_2$ (50%) | ○ | 83 |
| Example 2 | LiPF$_6$/FEC | None | 20 | BaSO$_4$ (50%) | ○ | 84 |
| Example 3 | LiPF$_6$/FEC | None | 30 | BaSO$_4$ (80%) | ○ | 81 |
| Example 4 | LiPF$_6$/FEC | None | 30 | BaSO$_4$ (3%) | △ | 88 |
| Example 5 | LiPF$_6$/FEC | VC (2%) | 5 | SrSO$_4$ (50%) | ○ | 93 |
| Example 6 | LiPF$_6$/FEC | VC (2%) | 5 | BaSO$_4$ (50%) | ○ | 93 |
| Example 7 | LiPF$_6$/FEC | VC (2%) | 20 | BaSO$_4$ (50%) | ○ | 88 |
| Example 8 | LiPF$_6$/FEC | VC (2%) | 10 | BaSO$_4$ (50%) | ○ | 91 |
| Example 9 | LiPF$_6$/FEC | VC (0.1%) | 5 | BaSO$_4$ (50%) | ○ | 82 |
| Example 10 | LiPF$_6$/FEC | VC (10%) | 5 | BaSO$_4$ (50%) | ○ | 83 |

(continued)

| | Electrolyte | | Co content in positive electrode active material (%) | Filler layer (content) | Forced internal short circuit test | Capacity recovery rate after high-temperature storage (%) |
|---|---|---|---|---|---|---|
| | Fluorine-based compound | Additive (content) | | | | |
| Comparative Example 1 | LiPF$_6$/FEC | None | 30 | None | × | 92 |
| Comparative Example 2 | LiPF$_6$/FEC | None | 30 | SiO$_2$ (50%) | ○ | 62 |
| Comparative Example 3 | LiPF$_6$/FEC | None | 30 | Al$_2$O$_3$ (50%) | ○ | 68 |

All of the batteries of Examples 1 to 10 and Comparative Examples 1 to 3 were lithium ion batteries using an electrolyte including fluorine. In Examples 1 to 10 in which an oxide compound of an alkaline earth metal was used for the filler layer of the insulating tape, an increase in battery temperature in the forced internal short circuit test was suppressed as compared with Comparative Example 1 in which the filler layer was not provided in the insulating tape, and a decrease in capacity recovery rate after high-temperature storage was suppressed as compared with Comparative Example 2 in which SiO$_2$ particles were used for the filler layer of the insulating tape and Comparative Example 3 in which Al$_2$O$_3$ particles were used for the filler layer of the insulating tape. In addition, as can be seen from the comparison between Examples 1 and 2, when the content of the oxide compound of an alkaline earth metal in the filler layer increases, an increase in battery temperature in the forced internal short circuit test is further suppressed, and when the content of the oxide compound of an alkaline earth metal in the filler layer decreases, a decrease in capacity recovery rate after high-temperature storage is further suppressed. In addition, as can be seen from the comparison between Examples 2 and 7, by adding vinylene carbonate, a decrease in capacity recovery rate after high-temperature storage is further suppressed. From the results of Examples 6, 9, and 10, the content of vinylene carbonate in the electrolyte is preferably in a range of 0.1 mass% or more and 10 mass% or less. As can be seen from the comparison between Examples 2 and 3 and the comparison between Examples 6, 7, and 8, when the Co content in the positive electrode active material decreases, a decrease in capacity recovery rate after high-temperature storage is further suppressed. From the results of Examples, the filler used for the filler layer may be an oxide compound of an alkaline earth metal.

REFERENCE SIGNS LIST

| | |
|---|---|
| 10 | Lithium ion battery |
| 11 | Positive electrode |
| 12 | Negative electrode |
| 13 | Separator |
| 14 | Electrode assembly |
| 15 | Battery case |
| 16 | Case body |
| 17 | Sealing assembly |
| 18, 19 | Insulating plate |
| 20 | Positive electrode lead |
| 20a | One end part |
| 20b | Extending part |
| 21 | Negative electrode lead |
| 22 | Projecting portion |
| 23 | Filter |
| 24 | Lower vent member |
| 25 | Insulator |
| 26 | Upper vent member |
| 27 | Cap |
| 28 | Gasket |
| 30 | Insulating tape |

| 30a | Filler layer |
| 30b | Substrate layer |
| 32 | Positive electrode current collector |
| 32a | Exposed part |
| 32b | Peripheral part |
| 34 | Positive electrode active material layer |

**Claims**

1. A lithium ion battery, comprising: a positive electrode; a negative electrode; a positive electrode lead connected to the positive electrode; an insulating tape covering the positive electrode lead; and an electrolyte, wherein

   the insulating tape has a substrate layer mainly containing organic material, and a filler layer provided on the substrate layer,
   the filler layer includes an oxide compound of an alkaline earth metal, and
   the electrolyte includes fluorine.

2. The lithium ion battery according to claim 1, wherein the electrolyte includes vinylene carbonate.

3. The lithium ion battery according to claim 1 or 2, wherein the positive electrode includes a Li composite oxide having a Co content of 20% or less.

4. The lithium ion battery according to any one of claims 1 to 3, wherein the electrolyte includes lithium difluorophosphate ($LiPO_2F_2$).

5. The lithium ion battery according to any one of claims 1 to 4, wherein a solvent of the electrolyte includes at least one selected from the group consisting of 4-fluoroethylene carbonate, 4,5-difluoroethylene carbonate, 4,4-difluoroethylene carbonate, 4,4,5-trifluoroethylene carbonate, 4,4,5,5-tetrafluoroethylene carbonate, fluorinated ethyl propionate, fluorinated methyl acetate, fluorinated ethyl acetate, fluorinated propyl acetate, ethyl 2,2,2-trifluoroacetate, methyl 3,3,3-trifluoropropionate, and methyl pentafluoropropionate.

6. The lithium ion battery according to any one of claims 1 to 5, wherein the electrolyte includes at least one selected from the group consisting of $LiPF_6$, lithium bis(fluorosulfonyl)imide (LiFSI), $LiBF_4$, $LiSbF_6$, $LiCF_3SO_3$, $LiCF_3CO_2$, and $LiAsF_6$.

7. The lithium ion battery according to any one of claims 1 to 6, wherein the oxide compound of an alkaline earth metal includes at least one of beryllium nitrate, magnesium nitrate, calcium nitrate, strontium nitrate, barium nitrate, beryllium sulfate, magnesium sulfate, calcium sulfate, strontium sulfate, and barium sulfate.

Figure 1

Figure 2A

Figure 2B

Figure 3

Figure 4A

Figure 4B

Figure 5A

Figure 5B

## INTERNATIONAL SEARCH REPORT

| International application No. |
| --- |
| PCT/JP2020/038955 |

**A. CLASSIFICATION OF SUBJECT MATTER**

Int. Cl. H01M4/525(2010.01)i, H01M10/052(2010.01)i, H01M10/0567(2010.01)i, H01M10/0568(2010.01)i, H01M10/0569(2010.01)i, H01M50/531(2021.01)i
FI: H01M10/052, H01M10/0567, H01M2/26 A, H01M4/525, H01M10/0569, H01M10/0568
According to International Patent Classification (IPC) or to both national classification and IPC

**B. FIELDS SEARCHED**

Minimum documentation searched (classification system followed by classification symbols)
Int. Cl. H01M4/525, H01M10/052, H01M10/0567, H01M10/0568, H01M10/0569, H01M2/26, H01M2/34

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | WO 2018/020896 A1 (PANASONIC INTELLECTUAL PROPERTY MANAGEMENT CO., LTD.) 01 February 2018, paragraphs [0015], [0018], [0019], [0038], [0039], [0053]-[0056], claim 6, fig. 1, 4 | 1, 3, 6<br>2, 4, 5<br>7 |
| X<br>Y<br>A | KR 10-2015-0047874 A (LC CHEM. LTD.) 06 May 2015, paragraphs [0032], [0040], [0041], [0045], [0058], [0061], [0068], fig. 2, 3 | 1-3, 5, 6<br>4<br>7 |
| Y<br>A | JP 2019-029243 A (TOYOTA MOTOR CORP.) 21 February 2019, paragraph [0055] | 2, 4, 5<br>7 |
| Y<br>A | JP 2019-046792 A (GS YUASA INTERNATIONAL LTD.) 22 March 2019, paragraph [0049], claim 5 | 2, 4, 5<br>7 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10.12.2020 | 22.12.2020 |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

## INTERNATIONAL SEARCH REPORT

| International application No. |
|---|
| PCT/JP2020/038955 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | WO 2015/004841 A1 (PANASONIC CORP.) 15 January 2015, paragraphs [0030]-[0034], claims 2, 4 | 2, 4, 5<br>7 |
| Y<br>A | WO 2019/107158 A1 (PANASONIC CORP.) 06 June 2019, paragraphs [0036], [0037] | 2, 4, 5<br>7 |
| A | WO 2019/167544 A1 (SANYO ELECTRIC CO., LTD.) 06 September 2019, paragraphs [0033]-[0042], fig. 3 | 7 |
| A | JP 2006-093147 A (SAMSUNG SDI CO., LTD.) 06 April 2006, paragraphs [0016]-[0026], fig. 1 | 1-7 |
| A | WO 2017/038010 A1 (PANASONIC INTELLECTUAL PROPERTY MANAGEMENT CO., LTD.) 09 March 2017, paragraphs [0038]-[0044], [0054] | 1-7 |
| A | JP 2014-232666 A (KANEKA CORP.) 11 December 2014, paragraphs [0028]-[0031], fig. 3 | 1-7 |

Form PCT/ISA/210 (continuation of second sheet) (January 2015)

**INTERNATIONAL SEARCH REPORT**
Information on patent family members

| | | International application No. |
|---|---|---|
| | | PCT/JP2020/038955 |

| Patent Documents referred to in the Report | Publication Date | Patent Family | Publication Date |
|---|---|---|---|
| WO 2018/020896 A1 | 01.02.2018 | US 2019/0157650 A1 paragraphs [0024], [0027], [0028], [0047], [0048], [0062]-[0065], claim 6, fig. 1, 4 <br> CN 109478631 A | |
| KR 10-2015-0047874 A | 06.05.2015 | (Family: none) | |
| JP 2019-029243 A | 21.02.2019 | (Family: none) | |
| JP 2019-046792 A | 22.03.2019 | (Family: none) | |
| WO 2015/004841 A1 | 15.01.2015 | US 2016/0043441 A1 paragraphs [0032]-[0036], claims 2, 4 <br> CN 105122533 A | |
| WO 2019/107158 A1 | 06.06.2019 | CN 111033869 A paragraphs [0042], [0043] | |
| WO 2019/167544 A1 | 06.09.2019 | (Family: none) | |
| JP 2006-093147 A | 06.04.2006 | US 2006/0093922 A1 paragraphs [0036]-[0045], fig. 1 <br> US 2012/0156564 A1 <br> EP 1641057 A2 <br> KR 10-0561303 B1 <br> KR 10-2006-0027266 A <br> KR 10-2006-0124036 A <br> CN 1753204 A | |
| WO 2017/038010 A1 | 09.03.2017 | US 2018/0159136 A1 paragraphs [0042]-[0047], [0057] <br> CN 107851769 A | |
| JP 2014-232666 A | 11.12.2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014089856 A
- WO 2017038010 A
- JP 2017152372 A